# EUROPÄISCHE PATENTSCHRIFT

(11) **EP 1 615 586 B1**
(45) Veröffentlichungstag und Bekanntmachung des Hinweises auf die Patenterteilung: **02.05.2012**
(21) Anmeldenummer: 03711782.7
(22) Anmeldetag: 22.04.2003
(51) Int. Cl.: A61C 17/22, A46D 1/00

(54) **BÜRSTENKOPF FÜR EINE ELEKTROZAHNBÜRSTE**
BRUSH HEAD FOR AN ELECTRIC TOOTHBRUSH
TETE DE BROSSE A DENTS ELECTRIQUE

(43) Veröffentlichungstag der Anmeldung: 18.01.2006
(60) Teilanmeldung: 07002691.9
(73) Patentinhaber: Trisa Holding AG, 6234 Triengen (CH)
(72) Erfinder: FISCHER, Franz, CH-6234 Triengen (CH); GROSS, Peter, CH-6204 Sempach (CH)
(74) Vertreter: Schaad, Balass, Menzl & Partner AG
(86) Internationale Anmeldenummer: PCT/CH2003/000263
(87) Internationale Veröffentlichungsnummer: WO 2004/093718

(56) Entgegenhaltungen:
- DE-A- 2 728 672
- DE-A- 4 441 985
- US-A- 5 305 489
- US-A- 5 533 227
- US-A- 6 021 538
- US-B1- 6 371 294

## Beschreibung

Die Erfindung betrifft einen Bürstenkopf für eine Elektrozahnbürste, eine Elektrozahnbürste mit einem solchen Bürstenkopf sowie ein Verfahren zur Herstellung eines solchen Bürstenkopfes mit den Merkmalen von Anspruch 1, 15 bzw. 16.

Elektrozahnbürsten haben üblicherweise einen Handgriff, in dem ein Motor untergebracht ist, sowie einen in der Regel auswechselbaren Bürstenkopf. Ein Bürstenkopf mit einem drehbeweglich antreibbaren Borstenträger ist beispielsweise aus der DE-U 295 20 230 oder aus der US 6 371 294 bekannt. Eine Elektrozahnbürste, deren Bürstenkopf in Vibration versetzt wird, geht aus der WO 01/28452 hervor. Des weiteren sind z.B. aus der CH 421 049 auch Elektrozahnbürsten bekannt, deren Bürstenköpfe nach Art einer Wippe eine Schwenkbewegung um ihre Längsachse ausführen. Bekannte Elektrozahnbürsten haben einen Bürstenkopf, der mit Bündeln aus konventionellen Borsten versehen ist. Diese sind zur Vermeidung von Verletzungen an ihrem Ende abgerundet.

Handzahnbürsten mit einem Borstenfeld, das vollständig aus zugespitzten Filamenten besteht, sind beispielsweise aus der EP-A 0 596 633 und der DE-U 90 12 603 bekannt. Die zugespitzten Filamente dienen zur Behandlung oder Reinigung feiner Strukturen in der Oberfläche des Zahns, z.B. von feinen Rissen, die mit konventionellen zylindrischen Borsten nicht effektiv bearbeitet werden können. Des weiteren können die zugespitzten Filamente dank der schmaleren Spitzen besser in die Zahnzwischenräume eindringen und diese reinigen. Elektrozahnbürsten mit zugespitztem Besatz sind aus der DE2728672 bekannt.

Zugespitzte Borsten reagieren im Bereich der Spitze jedoch schlecht auf mechanischen Abrieb. Bei zu grosser mechanischer Belastung brechen die Spitzen dieser Borsten und können zum einen die Reinigungswirkung nicht mehr entfalten und bergen zum anderen die Gefahr der Verletzung des Zahnfleischs durch die beim Abbrechen entstehenden Kanten und Ecken.

Der Erfindung liegt daher die Aufgabe zugrunde, bei minimalen Verletzungspotential des Zahnfleisches die Reinigungswirkung von Zahnbürsten mit zugespitztem Besatz weiter zu verbessern und die Lebensdauer der Borsten zu optimieren.

Die Aufgabe wird gelöst durch einen Bürstenkopf für eine Elektrozahnbürste mit den Merkmalen von Anspruch 1 sowie durch eine Elektrozahnbürste mit einem solchen Bürstenkopf gemäss Anspruch 15. Ein Herstellungsverfahren umfasst die Merkmale von Anspruch 16. Vorteilhafte Weiterbildungen der Erfindung ergeben sich aus den abhängigen Ansprüchen, der Beschreibung und den Zeichnungen.

Der Erfindung liegt die Erkenntnis zugrunde, dass die Reinigungswirkung von zugespitzten Filamenten bei minimalem Verschleiss optimal genutzt werden kann, wenn der Weg, den die zugespitzten Filamente beim bestimmungsgemässen Gebrauch zurücklegen, eingeschränkt wird. Diese Möglichkeit besteht bei Elektrozahnbürsten, bei denen der Bürstenkopf bzw. der Borstenträger und damit die Borsten durch den Antrieb auf vorbestimmte Weise in Bewegung versetzt wird und in der Regel nur eine minimale zusätzliche manuelle Putzbewegung erfolgt. Bei Elektrozahnbürsten lässt sich daher der bei Gebrauch zurückgelegte Weg der zugespitzten Filamente bzw. ihrer Spitzen durch die Anordnung der Filamente auf dem Borstenträger gut kontrollieren und einschränken. Erfindungsgemäss sind die zugespitzten Filamente derart auf dem Borstenträger angeordnet, dass ihre Spitzen beim Betrieb der Elektrozahnbürste höchstens einen vorbestimmten maximalen Weg dₘₐₓ zurücklegen. Der restliche Borstenträger kann mit konventionellen Borsten und/oder weiteren Reinigungselementen, z.B. weichelastischen Elementen, versehen sein. Konventionelle Borsten und/oder sonstige Reinigungselemente können auch zwischen den zugespitzten Filamenten angeordnet sein.

Durch die hochfrequente Bewegung der zugespitzten Filamente ist eine optimale Putzleistung gegeben. Durch die Einschränkung des Wegs, den die Spitzen zurücklegen, ist der Verschleiss der Borsten minimiert, so dass auch das Verletzungsrisiko für das Zahnfleisch gering gehalten wird.

Erfindungsgemäßβ beträgt der maximale Weg dₘₐₓ der Spitzen 3 mm. Diese Abstände entsprechen den typischen Abmessungen grösserer Zahnzwischenräume bzw. der Zähne. Werden diese maximalen Werte zugrundegelegt, bewegen sich die Borsten innerhalb der Strukturen im Gebiss. Damit können insbesondere feinste Fissuren auf der Zahnoberfläche und die Interdentalräume gut erreicht werden. Des weiteren kann ein sogenannter "Peitscheneffekt" beim Überstreichen der Zahnzwischenräume senkrecht zu deren Ausrichtung vermindert werden. Beim "Peitscheneffekt" biegen sich die zugespitzten Filamente aufgrund ihrer Eigenflexibilität an Hindernissen, wie dem

Übergang zwischen zwei Zähnen, durch und schnellen bei einer weiteren Bewegung peitschenartig vor, wodurch die Filamente stark beansprucht werden.

Die Filamente können einseitig oder beidseitig zugespitzt sein. Sie können auch zumindest im Bereich der Spitze gefärbt sein. Durch den Farbverlauf ist der Verschleiss der Bürste für den Benutzer sichtbar, z.B. wenn sich die Farbe mit der Zeit auswäscht.

Die Erfindung wird im folgenden mit Bezug auf die Zeichnungen näher erläutert. Dabei zeigen rein schematisch:
- Fig. 1a, b: drei Zähne in Seitenansicht bzw. Aufsicht zur Darstellung der gewünschten Bewegungen;
- Fig. 2: einen Bürstenkopf mit einem drehbar damit verbundenen Borstenträger mit konventionellen Borsten und zugespitzten Filamenten;
- Fig. 3: einen Bürstenkopf mit einem um die Längsachse schwenkbaren Borstenträger mit konventionellen Borsten und zugespitzten Filamenten;
- Fig. 4: einen Bürstenkopf mit einem vibrierenden Borstenträger mit konventionellen Borsten und zugespitzten Filamenten;
- Fig. 5a-c: einen Bürstenkopf mit einem mehrteiligen Borstenträger;
- Fig. 6a-d: bevorzugte Anordnungen von Bündeln aus zugespitzten Filamenten auf einem Bürstenkopf;
- Fig. 7: einen Borstenträger mit Bündeln aus zugespitzten Filamenten;
- Fig. 8: einen Borstenträger mit Bündeln aus zugespitzten Filamenten und konventionellen Borsten;
- Fig. 9a, b: eine konventionelle bzw. zugespitzte Borste;
- Fig. 10a-e: Bündel aus zugespitzten Filamenten mit verschiedenen Formen;
- Fig. 10f,g: Bündel aus zugespitzten Filamenten mit verschiedenen Profilen;
- Fig. 11a-e: Bürstenköpfe in Seitenansicht mit verschiedenen Profilen der zugespitzten Filamente;
- Fig. 12: einen Bürstenkopf mit Bündeln aus Borsten gemäss Fig. 10a..

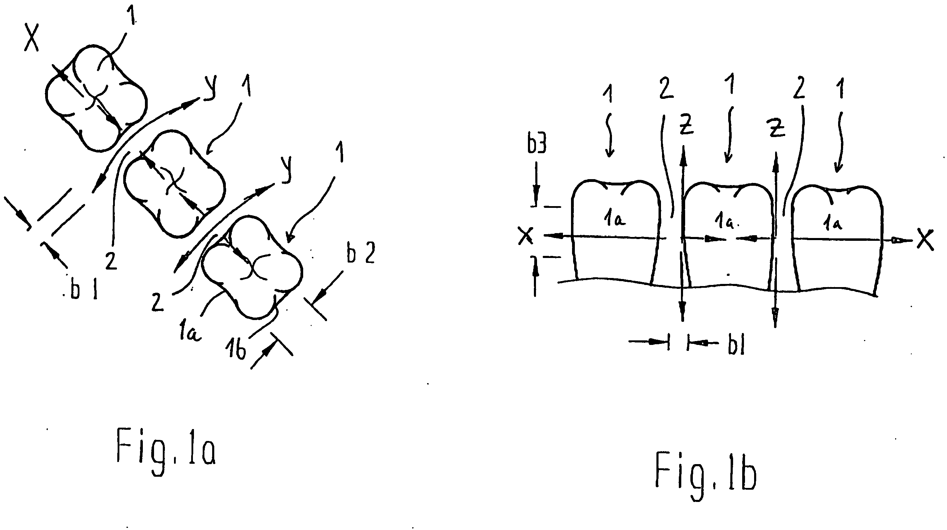

Fig. 1a, b zeigt drei in einer Zahnreihe stehende Zähne 1 mit dazwischen liegenden Interdentalräumen 2 in Seitenansicht bzw. Aufsicht. Beispiele für Bürstenköpfe 3 mit zugespitzten Filamenten 5 gehen aus den übrigen Figuren hervor.

Mit zugespitzten Filamenten 5 werden bevorzugt kleine Bewegungen entlang der Zahnreihe in Richtung X und etwas grössere Bewegungen quer dazu, d.h. in Richtung Y in der Zahnebene bzw. in Richtung Z senkrecht zur Zahnebene, ausgeführt. Zu grosse Bewegungen entlang der X-Richtung sollen vermieden werden, da diese mit einer grossen mechanischen Belastung der zugespitzten Filamente 5 einhergehen (Peitscheneffekt). Damit erstrecken sich die gewünschten Bewegungen der zugespitzten Filamente 5 über die gesamte Breite b1 der Interdentalräume 2 und über einen Streifen der Breite b2 bzw. b3 entlang der Flanken 1a, 1b der Zähne. Die Breite b1 beträgt typischerweise ca. 2 mm, die Breite b2, b3 jeweils ca. 5 mm.

Um im Vergleich zum manuellen Putzen eine verbesserte Reinigungswirkung zu erreichen, wird der Bürstenkopf 3 derart angetrieben, dass die zugespitzten Filamente 5 mehr als 1'000 Putzbewegungen pro Minute vorzugsweise aber mehr als 5'000 Bewegungen erreichen. Beim manuellen Putzen werden deutlich weniger als 1000 Bewegungen während des gesamten Putzvorgangs erreicht. Pro Bewegung legt die Spitze 5a einer zugespitzten Borste eine Distanz d bezüglich dem ruhenden Gebiss zurück (d.h. ohne Überlagerung einer gegebenenfalls manuell ausgeführten Putzbewegung). Um die zugespitzten Filamente 5 bei dieser hochfrequenten Hin- und Herbewegung an den Zahnoberflächen und insbesondere beim Wechsel zwischen Zahnoberfläche 1a, 1b und Zahnzwischenräumen nicht übermässig zu belasten, ist der Weg d der Spitzen 5a der Filamente 5 kleiner als ein vorbestimmter maximaler Weg dₘₐₓ, der 3 mm beträgt. Diese Werte entsprechen in etwa der Grösse von grossen Zahnzwischenräumen 2, welche somit ohne die Beschädigung der Spitzen 5a optimal gereinigt werden können. Durch die Kontrolle und Beschränkung der Bewegungen der Spitzen 5a wird das Risiko von Verletzungen des Zahnfleischs reduziert.

In einer vorteilhaften Weiterbildung hängt der maximale Weg dₘₐₓ der Spitzen 5a von der Bewegungsrichtung ab, wobei der maximale Weg d_{max, längs} in Längsrichtung L des Bürstenkopfes 3 vorzugsweise geringer ist als der maximale Weg d_{max,quer} quer dazu. Die Längsrichtung L des Bürstenkopfs 3 entspricht im Gebrauch etwa der Richtung X der Zahnreihe, in der die Bewegungen der Borsten wegen des Zahn-Zahn-Übergangs und der damit einhergehenden Belastung der Borsten vorzugsweise einzuschränken sind. Damit wird der Geometrie des Gebisses Rechnung getragen und eine Bewegung entlang der Zahnzwischenräume 2, d.h. in y- und Z-Richtung, mit grösserer Auslenkung als quer dazu zugelassen. Bevorzugt ist d_{max,längs} 3 mm (X-Richtung) und d_{max,quer} 5 mm (Y-, Z-Richtung).

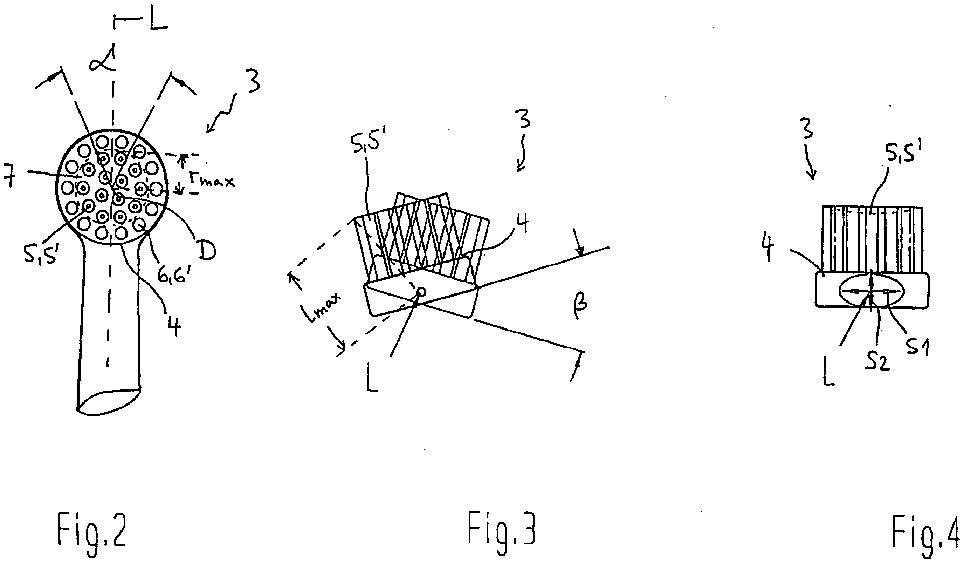

Fig. 2-4 und 5a-c zeigen verschiedene Beispiele für Bürstenköpfe mit einem Borstenfeld aus konventionellen Borsten 6 und zugespitzten Filamenten 5. Die Borsten 5, 6 sind jeweils in Bündeln 5', 6' auf einem Borstenträger 4 angeordnet. Die Bündel 6' aus konventionellen Borsten 6 sind durch einen leeren Kreis und die Bündel 5' aus zugespitzten Filamenten 5 durch einen Kreis mit einem Punkt symbolisiert.

Beim in Fig. 2 dargestellten Bürstenkopf 3 ist der Borstenträger 4 mit dem Bürstenkopf 3 um eine senkrecht zum Borstenträger 4 verlaufende Drehachse D hin- und herdrehbar verbunden. Dazu ist ein geeigneter Antrieb vorhanden (hier nicht dargestellt). Im Betrieb wird ein maximaler Drehwinkel a erreicht. Die zugespitzten Filamente 5 sind derart auf dem Borstenträger angeordnet, dass für den maximalen Abstand rₘₐₓ ihrer Austrittspunkte auf dem Borstenträger von der Drehachse D gilt: rₘₐₓ=dₘₐₓ•180°: (πα), wobei dₘₐₓ der eingangs genannte maximale Weg ist. Genähert (Distanz der Umkehrpunkte statt Länge des Bogens) gilt rₘₐₓ=dₘₐₓ: (2sin(α/2)). Erfindungsgemäß gilt dₘₐₓ=3mm.

Derzeit sind Geräte mit Drehwinkeln bis 70° auf dem Markt. Der Durchmesser des Bürstenkopfes 3 beträgt in der Regel weniger als 20 mm. Die Bewegung der Spitzen 5a nimmt mit dem Radius bzw. dem Abstand zur Drehachse zu. Die folgende Tabelle gibt einige Werte für den Weg an, der in Abhängigkeit des Drehwinkels und des Radius berechnet wurde. Die grau hinterlegten Wegangaben gehören zu erfindungsgemäss für dₘₐₓ=3 mm zulässigen Wertepaaren Radius/Drehwinkel (dₘₐₓ=Distanz der Umkehrpunkte).

| Radius (mm) | α=10° | α=20° | α=30° | α=40° | α=50° | α=60° | α=70° |
|---|---|---|---|---|---|---|---|
| 1 | 0,2 | 0,3 | 0,5 | 0,7 | 0,8 | 1,0 | 1,1 |
| 2 | 0,3 | 0,7 | 1,0 | 1,4 | 1,7 | 2,0 | 2,3 |
| 3 | 0,5 | 1,0 | 1,6 | 2,1 | 2,5 | 3,0 | 3,4 |
| 4 | 0,7 | 1,4 | 2,1 | 2,7 | 3,4 | 4,0 | 4,6 |
| 5 | 0,9 | 1,7 | 2,6 | 3,4 | 4,2 | 5,0 | 5,7 |
| 6 | 1,0 | 2,1 | 3,1 | 4,1 | 5,1 | 6,0 | 6,9 |
| 7 | 1,2 | 2,4 | 3,6 | 4,8 | 5,9 | 7,0 | 8,0 |
| 8 | 1,4 | 2,8 | 4,1 | 5,5 | 6,8 | 8,0 | 9,2 |
| 9 | 1,6 | 3,1 | 4,7 | 6.2 | 7,6 | 9,0 | 10,3 |
| 10 | 1,7 | 3,5 | 5,2 | 6,8 | 8,5 | 10,0 | 11,5 |

Die Tabelle zeigt, dass bei kleinen Drehwinkeln im Prinzip der ganze Bürstenkopf 3 mit zugespitzten Borsten 5 besetzt werden kann und dass bei grossen Drehwinkeln nur ein zentrales Segment 7 mit zugespitzten Borsten 5 besetzt werden sollte.

Fig. 3 zeigt einen Bürstenkopf 3, der im Betrieb um seine Längsachse L verschwenkt wird, so dass der Bürstenkopf 3 eine wippende Seitwärtsbewegung ausführt. Der Bürstenkopf 3 überstreicht dabei einen Winkel β. Für den maximalen Abstand Iₘₐₓ der Spitzen der zugespitzten Filamente von der Schwenkachse L gilt Iₘₐₓ=dₘₐₓ•180°: (πβ) bzw. Iₘₐₓ=dₘₐₓ: (2sin (β/2)) (Distanz der Umkehrpunkte), wobei dₘₐₓ• der eingangs genannte maximale Weg ist. Vorzugsweise ist dₘₐₓ=3mm.

Im Zusammenhang mit zugespitzten Borsten 5 bietet sich die wippende Seitwärtsbewegung besonders an. Mit diesem Zahnbürstentyp bewegen sich die zugespitzten Borsten 5 beim Gebrauch entlang den Interdentalräumen 2. Die für die Borsten und Zahnfleisch weniger erwünschte Bewegungsrichtung bleibt für die zugespitzten Borsten 5 aus. Bei dieser Bewegung sollte der maximal zurückgelegte Weg der Spitzen ebenfalls kleiner 3 mm sein. Der Drehwinkel kann somit anhand der folgenden Tabelle in Abhängigkeit des Abstands der Spitzen von der Schwenkachse festgelegt werden. Die grau hinterlegten Wegangaben gehören zu erfindungsgemäss für dₘₐₓ=3 mm zulässigen Wertepaaren Abstand/Schwenkwinkel. Bei einem mittleren Abstand von 12 mm sollte der Drehwinkel des Bürstenkopfes nicht grösser 15° gewählt werden.

| Abstand (mm) | β=10° | β=15° | β=20° | β=25° | β=30° | β=35° |
|---|---|---|---|---|---|---|
| 9 | 1,6 | 2,3 | 3,1 | 3,9 | 4,7 | 5,4 |
| 10 | 1,7 | 2,6 | 3,5 | 4,3 | 5,2 | 6,0 |
| 11 | 1,9 | 2,9 | 3,8 | 4,8 | 5,7 | 6,6 |
| 12 | 2,1 | 3,1 | 4,2 | 5,2 | 6,2 | 7,2 |
| 13 | 2,3 | 3,4 | 4,5 | 5,6 | 6,7 | 7,8 |
| 14 | 2,4 | 3,7 | 4,9 | 6,1 | 7,2 | 8,4 |
| 15 | 2,6 | 3,9 | 5,2 | 6,5 | 7,8 | 9,0 |

Fig. 4 zeigt rein schematisch einen Bürstenkopf 3, der in zwei Richtungen S1, S2 quer zur Längsrichtung L vibriert. Bei dieser Bewegungsvariante hat die Bürstenkopfgeometrie weniger Einfluss auf die Auslenkung der konventionellen und zugespitzten Borsten 5,6. Die Grösse der Auslenkung kann durch Wahl von Strom, Motor und/oder Schwingungsgebern bestimmt werden. Durch einen speziellen Aufbau des Bürstengriffes, z.B. Versteifung in vertikaler Richtung, und zusätzlichen Dämpfungsmassnahmen kann die Richtung der Auslenkung beeinflusst werden. Da die Auslenkung des Bürstenkopfes 3 und damit der Spitzen der zugespitzten Filamente 5 vorzugsweise den Interdentalräumen 2 folgt, soll die Zahnbürste vorzugsweise eine grössere seitliche Auslenkung in Richtung S1 als eine vertikale Auslenkung in Richtung S2 aufweisen. Auslenkungen von weniger als 3 mm ergeben auch hier eine sehr schonende Wirkung und eine Stimulierung des Zahnfleisches.

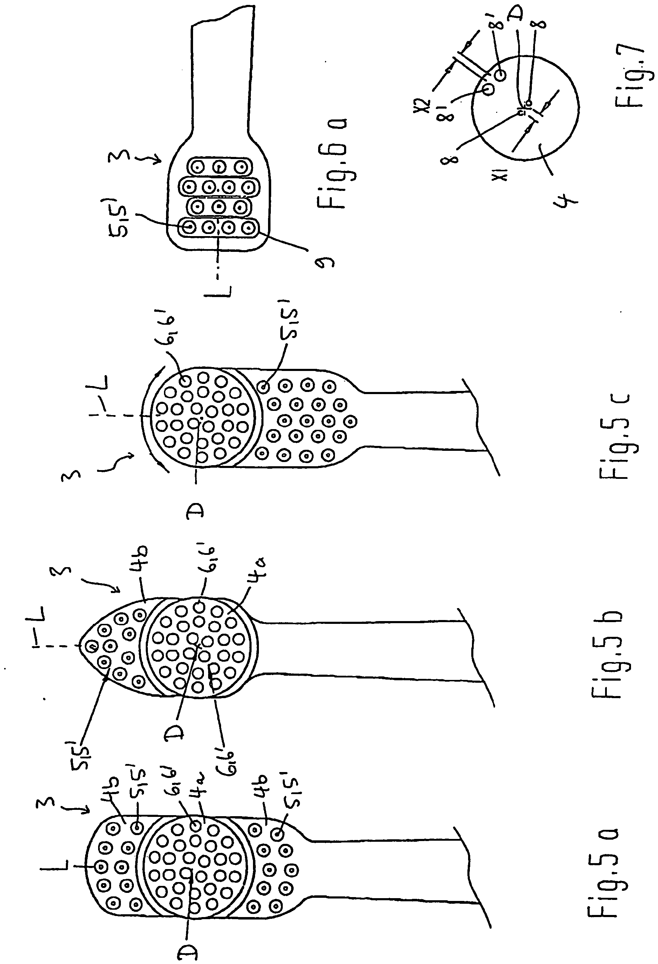

Fig. 5a-c zeigen Bürstenköpfe 3, bei denen eine Rotationsbewegung mit anderen Bewegungstypen kombiniert wird. Wird mit einer Elektrozahnbürste eine mechanische Bewegung, z.B. Rotation, ausgeführt, entstehen auf jeden Fall auch Vibrationen. In den vorliegenden Beispielen ist der Borstenträger 4 mehrteilig. Ein rundes erstes Trägerelement 4a ist um die Drehachse D drehbar mit dem Bürstenkopf 3 verbunden (vgl. Fig. 2). Es ist mit konventionellen Borsten 6 besetzt. Mindestens ein weiteres Trägerelement 4b ist fest mit dem Bürstenkopf 3 verbunden und mit zugespitzten Filamenten 5 besetzt. Er wird bei Rotation des Teils 4a in Vibration versetzt. In Fig. 5a befindet sich dieses weitere Trägerelement 4b in Längsrichtung L vor und hinter dem rotierenden Trägerelement 4a, in Fig. 5b nur hinter und in Fig. 5c nur vor diesem. Das bewegte Trägerelement 4a mit konventionellen Borsten 6 übernimmt die Flächenreinigung und das mitvibrierende, nur indirekt mechanisch bewegte Trägerelement 4b mit den zugespitzten Borsten 5 die Interdentalreinigung und zur Reinigung kleinster Strukturen. Statt das erste Trägerelement 4a zu drehen, kann es auch um die Längsachse verschwenkt werden.

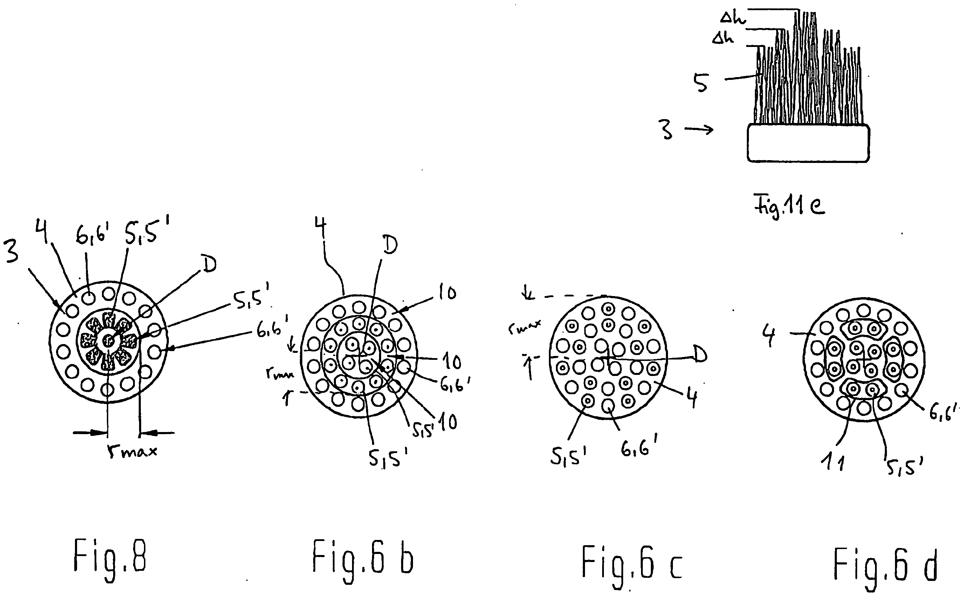

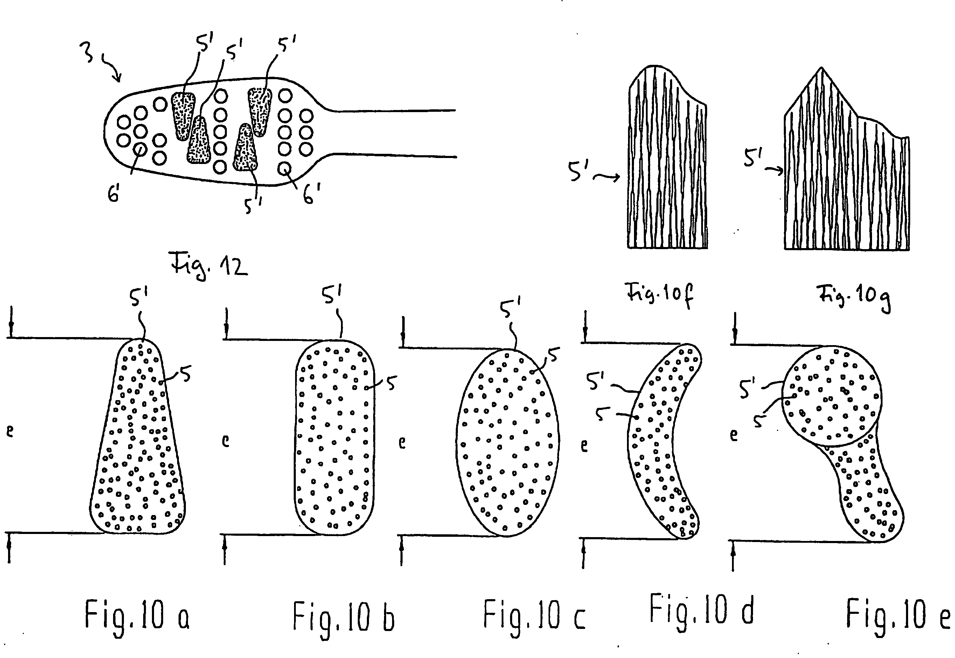

Fig. 6a-d zeigen Beispiele für die Anordnung der zugespitzten Filamente 5 auf dem Borstenträger 4. Die zugespitzten Filamente 5 sind zunächst zu Bündeln 5' zusammengefasst. Diese sind vorliegend im Querschnitt kreisförmig, können aber auch eine andere Form haben, z.B. wie in Fig. 10a-e dargestellt. Die Bündel 5' sind beim Bürstenkopf 3 gemäss Fig. 6a zu Reihen 9 zusammengefasst, die quer zur Längsrichtung L verlaufen. Diese Anordnung wird bevorzugt bei um die Längsachse L verschwenkbaren oder in dieser Richtung vibrierenden Borstenträgern 4 eingesetzt, da die Reihen 9 dort mit der Laufrichtung der Bündel 5' übereinstimmen. Beim Beispiel aus Fig. 6b sind die Borstenbündel 5' auf Kreisbögen 10 angeordnet. Diese Anordnung wird bevorzugt bei rotierenden Borstenträgern 4 eingesetzt. Es sind zwei innere Kreise aus Borstenbündeln 5' mit zugespitzten Filamenten 5 vorhanden, deren maximaler Radius rₘₐₓ ist. In beiden Fällen kann somit der Wirkbereich der zugespitzten Borsten 5 räumlich gut eingegrenzt werden.

Fig. 6c zeigt ein Beispiel für ein Borstenfeld mit gemischt angeordneten Bündeln 5', 6' aus zugespitzten und normalen Borsten 5, 6 auf einem runden Borstenträger 4 mit Radius rₘₐₓ. Das gemischte Borstenfeld hat den Vorteil, dass die zugespitzten Borsten 5 mehr Bewegungsspielraum haben und beim Gebrauch trotz Verbiegen an den Zahristrukturen nicht untereinander verklemmen. Grundsätzlich sollte den zugespitzten Borsten 5 mehr Bewegungsspielraum zur Verfügung stehen als den normalen Borsten 6. Insbesondere im Grenzbereich, d.h. für Anordnungen, in denen die Borstenspitzen etwa die maximale Distanz dₘₐₓ zurücklegen, ist eine solche Mischung mit normalen Borsten vorteilhaft.

Fig. 6d zeigt ein Borstenfeld, bei dem die Bündel 5' aus zugespitzten Borsten 5 in kreisbogenförmigen Segmenten 11 angeordnet sind. Diese Anordnung entspricht im wesentlichen Fig. 6b und eignet sich ebenfalls für rotierende Bürsten.

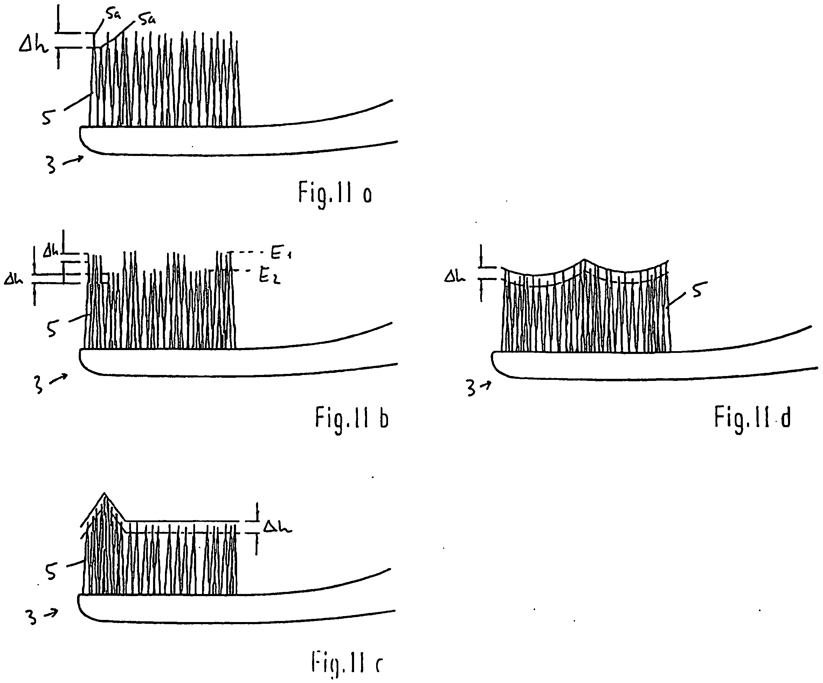

Statt Borstenbündel 5' mit rundem Querschnitt wie beschrieben in Gruppen (Reihen, Kreisen, Segmenten) anzuordnen, können auch Borstenbündel 5' mit einem entsprechend angepassten Querschnitt verwendet werden (siehe Fig. 11a-e).

Damit sich die zugespitzten Filamente 5 frei bewegen können und die Interdentalräume 2 nicht verstopft werden, sind die einzelnen Bündel 8 bevorzugt genügend voneinander beabstandet. Da die Spitzen bei gewissen Ausführungsformen in Abhängigkeit von ihrem Ort auf dem Borstenträger 4 unterschiedliche Distanzen zurücklegen, wird der minimale Lochabstand x zwischen benachbarten Bündeln 8 in Abhängigkeit des zurückgelegten Wegs festgelegt. Fig. 7 zeigt ein Beispiel für einen rotierenden Borstenträger 4, bei dem der Übersichtlichkeit halber nur ein zentral angeordnetes Paar von Borstenbündeln 8 und ein peripher angeordnetes weiteres Paar von Borstenbündeln 8' gezeigt ist. Die minimalen Abstände x1 nahe der Rotationsachse D sind kleiner als die minimalen Abstände x2 weiter entfernt von der Rotationsachse D.

Da sich bei gewissen Ausführungsformen zugespitzter Besatz nur an geeigneter Position auf der Bürstenkopfoberfläche anbietet, können an den nicht geeigneten Positionen andere Filamenttypen eingesetzt werden. Konventionell abgerundete Borsten, die z.B. aus Polyester PBT oder Polyamid PA bestehen, können insbesondere zur Flächenreinigung der Zahnoberfläche eingesetzt werden. Falls zusätzlich ein Massageeffekt des Zahnfleisches erwünscht ist, können zusätzlich weiche gummielastische Elemente in Form von Borsten, Lamellen oder anderen Gebilden aus thermoplastischem Elastomer TPE gespritzt oder eingesetzt werden. Fig. 8 zeigt ein Beispiel für einen Borstenträger 4 mit einem solchen gemischten Borstenfeld aus zugespitzten Filamenten 5 innerhalb eines zentralen Feldes mit Radius rₘₐₓ und peripher angeordneten konventionellen Borstenbündeln 6.

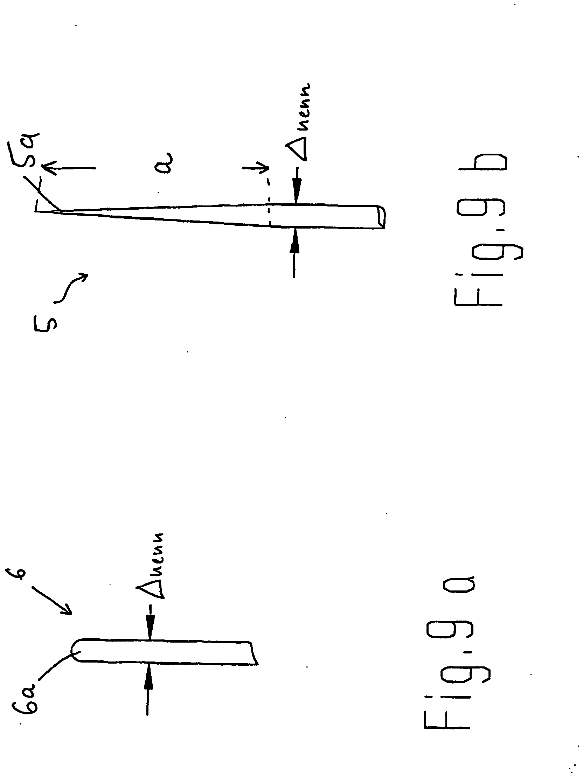

Fig. 9a, b erläutert die Dimensionierung der konventionellen bzw. zugespitzten Borsten 5, 6. Die in Fig. 9a skizzierten konventionellen Borsten 6 haben über ihre Länge einen im wesentlichen konstanten Nenndurchmesser Δₙₑₙₙ (Durchmesser an der dicksten Stelle der Borste), der z.B. 0,15 bis 0,25 mm beträgt. Die Spitze 6a der Borste ist abgerundet.

Um das Verletzungspotential bei Zahnbürsten mit hochfrequenten Bewegungen zu minimieren und deren Lebensdauer zu maximieren, sind besondere Anforderungen an die Geometrie und die Beschaffenheit der zugespitzten Filamente 5 gestellt. Die in Fig. 9b skizzierten zugespitzten Borsten 5 haben über einen Bereich ihrer Länge ebenfalls einen konstanten Durchmesser, z.B. ebenfalls einen Nenndurchmesser von 0,15 - 0,25 mm. Zur Spitze 5a hin verjüngt sich die Borste 5, beginnend bei einem Abstand a von der Spitze 5a. Gemessen ab der Spitze 5a entspricht der Durchmesser an der entsprechenden Stelle beispielsweise folgenden Werten:

| Abstand (mm) | % des Nenndurchmessers | |
|---|---|---|
| | Mittelwert | Toleranzbereich |
| 0,1 | 8% | 5-15% |
| 1 | 25% | 15-35% |
| 2 | 45% | 30-60% |
| 3 | 60% | 50-80% |
| 4 | 75% | 60-90% |
| 5 | 80% | 70-90% |
| 6 | 85% | > 75% |
| 7 | 90% | >80% |

Um eine genügende Flexibilität der Filamente zu erreichen wird deren Länge ab Austritt aus dem Bürstenkopf zwischen 7 und 13 mm gewählt. Um bei einer hochfrequenten Bewegung genügend Stabilität der einzelnen Filamente zu bewahren, wird der Nenndurchmesser über einen Grossteil der Länge auf über 75% belassen. Die oben aufgeführte Tabelle zeigt, dass die Zuspitzung der Filamente zum überwiegenden Teil auf den letzten 4 bis 5 mm erfolgen. Mit dieser Ausgestaltung kann die Spitze 5a kleinste Fissuren und die Interdentalräume 2 bei genügender Filamentstabilität optimal erreichen.

Für die zugespitzten Borsten wird Polyamid vorzugsweise aber Polyester (PBT) eingesetzt. Der Zuspitzungsprozess basiert auf der Reduktion des Durchmessers mittels einem chemischen Prozess. Je nach Länge des Aufenthaltes der Borste in der chemischen Substanz baut sich der Kunststoff ab und verringert sich der Durchmesser. Die Form der Spitze ist so beeinflussbar.

Fig. 10a-e zeigt Beispiele für die Form von Bündeln 5' aus zugespitzten Filamenten 5. Ein derartiges Bündel 5' muss nicht unbedingt eine runde Form haben. Es kommen im wesentlichen dreieckige (Fig. 10a), im wesentlichen rechteckige (Fig. 10b), elliptische (Fig. 10c), kreisbogenförmige (Fig. 10d) oder sonstige Formen (Fig. 10e) in Frage. Die länglichen Formen gemäss Fig. 10a-c bieten sich insbesondere für verschwenkbare Zahnbürsten an und können statt der Anordnung runder Borstenbündel in Reihen eingesetzt werden (vgl. Fig. 12, in der ein gemischtes Borstenfeld aus normalen Borstenbündeln 6' mit rundem Querschnitt und Bündeln 5' aus zugespitzten Borsten 5 mit der in Fig. 10a dargestellten Form gezeigt ist). Die in Fig. 10d gezeigte Form ist besonders vorteilhaft für rotierende Zahnbürsten.

Die grösste Ausdehnung e beträgt vorzugsweise etwa 3 mm und entspricht damit einem grossen Interdentalabstand. Werden zu viele Filamente pro Bündel 5' zusammengefasst, kann dies zu einer unnötigen Versteifung der einzelnen Filamente 5 kommen und das Eindringen in die Interdentalräume 2 erschweren. Ein Bündel 5' enthält daher vorzugsweise weniger als 80, besonders bevorzugt weniger als 50 zugespitzte Spitzen 5a der Filamente 5. Dabei kann je nach Herstellungstechnik jedes Filament eine oder zwei zugespitzte Spitzen 5a haben. Gewisse Filamente haben auch eine runde und eine spitze Spitze 5a.

Fig. 10f+g zeigen Beispiele für das Höhenprofil der Borstenbündel 5' aus Fig. 11d bzw. Fig. 11e. Derartige nicht konstante Höhenprofile werden bevorzugt im AFT- oder IMT-Verfahren realisiert.

Fig. 11a-e zeigen Bürstenköpfe 3 in Seitenansicht, bei denen die Spitzen 5a der zugespitzten Filamente 5 verschiedene Profile ausbilden. FIg. 11a-d beziehen sich auf verschwenkbare Bürstenköpfe Fig. 11e auf einen rotierenden Bürstenkopf.

Fabrikationstechnisch bedingt ist das in Fig. 11a gezeigte flache Profil am einfachsten herzustellen. Dabei wird unter Verwendung konventioneller Stanztechnologie nur eine Filamentgrundlänge verwendet. Etwa 80% der Filamentenden sind innerhalb eines Höhenbereichs Δh von 4 mm Breite positioniert. Unterschiedliche Filamentlängen innerhalb dieser Grenzen sind bis zu einem gewissen Grad erwünscht, da sie damit eine interdentale Penetration einfacher gewährleisten, als bei einer exakt gleichen Länge, wie sie beim Schneiden von konventionellen Borsten entsteht. Einzelne, massiv vorstehende Filamente sollten allerdings vermieden werden, da diese insbesondere bei einer hochfrequenten Bewegung die Gefahr von Verletzung des Zahnfleisches bergen.

Fig. 11b zeigt einen Bürstenkopf, bei dem mittels konventioneller Stanztechnologie mit zwei verschiedenen Grundlängen der zugespitzten Borsten eine von einer Ebene abweichende Profilform erzeugt ist. Üblicherweise sind beide Enden der Filamente zugespitzt. Letztere werden zum Beborsten U-förmig gebogen. Aus diesem Grund kann man den zugespitzten Besatz nicht schneiden und ist mit dieser Technologie auf verschiedene Ebenen, hier Ebenen E1 und E2 limitiert. Innerhalb der Ebenen E1, E2 sind wiederum Höhenvariationen innerhalb des etwa 4 mm breiten Höhenbereichs Δh möglich. Mehr Freiheiten ergeben sich bei einseitig zugespitzten Filamenten.

Werden aus den bereits genanten Gründen verschiedene Filamenttypen kombiniert, sind die zugespitzten Filamente 5 zur Interdentalreinigung bevorzugt länger als konventionell abgerundete Borsten oder Massageelemente. Das Einsetzen der unterschiedlichen Borstentypen in den Borstenträger erfolgt vorzugsweise bei gleichzeitigem Verdrängen der jeweils anderen Borstensorte(n). Alternativ können die Borstenträger 4 mehrteilig sein, separat beborstet und anschliessen zusammengefügt werden.

Zur Herstellung der erfindungsgemässen Bürstenköpfe 3 bietet sich vor allem das AFT (Anchor Free Tufting) oder IMT (In Mould Tufting) Verfahren an. Das AFT-Verfahren ist beispielsweise in der EP-A 0 972 464 beschrieben. Das IMT-Verfahren ist beispielsweise in der EP-A 0 795 711 und der EP-A 0 346 646 beschrieben. Die zugespitzten Filamente 5 werden in diesem Fall, anders als beim konventionellen Stopfen, nur einseitig zugespitzt der AFT oder IMT Anlage zugeführt. Die Länge der Filamente beträgt zwischen 10 und 20 mm. Vorzugsweise werden die Filamente mit den Spitzen nach unten in den Stoffkasten eingeführt. Eine spätere Umorientierung innerhalb der AFT oder IMT Anlage erübrigt sich somit. Die Filamente werden durch die schiebenden Mittel auf der zugespitzten Seite durch den Borstenträger (bei IMT durch die Transporteinsätze) gestossen. Der Borstenträger weist dazu Ausnehmungen für die Borsten auf. Die nicht zugespitzte Seite wird geschnitten und anschliessend wie bekannt aufgeschmolzen. Falls der Borstenträger nicht einstückig mit dem Bürstenkopf ist, werden die beiden Teile anschliessen vorzugsweise mittels Ultraschallschweissen miteinander verbunden.

Das AFT oder IMT Verfahren ermöglicht eine vereinfachte Herstellung der zugespitzten Filamente, da diese nur einseitig zugespitzt werden müssen. Des weiteren können durch entsprechende Ausgestaltung der schiebenden Mittel die einzelnen Bündel profiliert werden, z.B. zur besseren Interdentalpenetration. Beispiele hierfür sind in Fig. 11c-e bzw. auch in Fig. 10f+g (Profilierung der einzelnen Bündel) gezeigt. Dies ist mit der konventionellen Stopftechnologie nicht möglich. Da die Filamente nach dem Profilieren geschnitten werden, muss nur eine Filamentlänge geführt werden. Die Borsten können auf die erwünschte Länge zugeschnitten werden. Im Gegensatz dazu müssen bei konventioneller Stopftechnologie mehrere Stofflängen eingesetzt werden, um eine von der Ebene abweichende Topographie zu erstellen.

Das AFT- und IMT-Verfahren hat somit grosse Vorteile zur Herstellung der erfindungsgemässen Zahnbürsten, da es eine weitgehend beliebige Form der Borstenbündel ermöglicht. Somit kann der von den Spitzen im Gebrauch zurückgelegte Weg besonders gut kontrolliert werden. Das Herstellungsverfahren kann vorteilhaft auch zur Herstellung von manuellen Zahnbürsten eingesetzt werden.

## Patentansprüche

1. Bürstenkopf (3) für eine Elektrozahnbürste mit einem in Bewegung versetzbaren Borstenträger (4), in dem Borsten (5, 6) verankert sind und der um eine senkrecht zum Borstenträger (4) verlaufende Drehachse (D) um einen maximalen Drehwinkel (α) hin- und herdrehbar mit dem Bürstenkopf (3) verbunden ist, **dadurch gekennzeichnet, dass** wenigstens ein Teil der Borsten zugespitzte Filamente (5) sind, die derart auf dem Borstenträger (4) angeordnet sind, dass der maximale Abstand (rₘₐₓ) ihrer Austrittspunkte auf dem Borstenträger (4) von der Drehachse (D), rₘₐₓ = 3 mm * 180°/ (π*α) oder rₘₐₓ = 3 mm / (2sin(α/2)) beträgt und dass die Spitzen (5a) der Filamente (5) beim Betrieb der Elektrozahnbürste höchstens einen Weg dₘₐₓ = 3 mm zurücklegen.

2. Bürstenkopf (3) nach Anspruch 1, **dadurch gekennzeichnet, dass** die Filamente (5) in Bündeln (5') angeordnet sind, wobei die Filamente (5) einen maximalen Durchmesser oder Nenndurchmesser Δₙₑₙₙ von 0,15 bis 0,25 mm und eine vom Austrittepunkt auf dem Borstenträger (4) gemessene Länge von 7 bis 13 mm haben und deren Durchmesser bis zu einem Abstand von 5 bis 6 mm von der Spitze (5a) der Filamente (5) grössere als 75% des Nenndurchmessers ist und sich bei geringer werdendem Abstand verkleinert.

3. Bürstenkopf (3) nach Anspruch 1 oder 2, dadurch A15129WOEP/01.09.2011/A1 gekennzeichnet, dass bei einem Drehwinkel (α) von kleiner oder gleich 20° der maximale Abstand (rₘₐₓ) kleiner oder gleich 8 mm ist.

4. Bürstenkopf (3) nach Anspruch 1 oder 2, **dadurch gekennzeichnet, dass** bei einem Drehwinkel (α) von kleiner oder gleich 30° der maximale Abstand (rₘₐₓ) kleiner oder gleich 5 mm ist.

5. Bürstenkopf (3) nach einem der vorhergehenden Ansprüche, **dadurch gekennzeichnet, dass** der Bürstenkopf (3) derart angetrieben wird, dass die Borsten (5, 6) wenigstens 1000, vorzugsweise mehr als 5000 Bewegungen pro Minute ausführen.

6. Bürstenkopf (3) nach einem der vorhergehenden Ansprüche, **dadurch gekennzeichnet, dass** der Borstenträger (4) durch einen Antrieb in eine Drehbewegung versetzbar ist.

7. Bürstenkopf (3) nach einem der vorhergehenden Ansprüche, **dadurch gekennzeichnet, dass** der Borstenträger (4) beim Betrieb der Elektrozahnbürste eine Schwenkbewegung um eine im wesentlichen in Längsrichtung (L) des Bürstenkopfes (3) verlaufende Achse mit einem maximalen Schwenkwinkel β auszuführen imstande ist und für den maximalen Abstand lₘₐₓ der Spitzen (5a) der zugespitzten Filamente (5) gilt Iₘₐₓ=dₘₐₓ•180°:(πβ) oder Iₘₐₓ=dₘₐₓ: (2sin(β/2)), vorzugsweise mit dₘₐₓ=3 mm, wobei dₘₐₓ der maximale Weg ist, den Spitzen (5a) der Filamente (5) bei der Schwenkbewegung zurücklegen.

8. Bürstenkopf (3) nach einem der vorhergehenden Ansprüche, **dadurch gekennzeichnet, dass** der Borstenträger (4) beim Betrieb der Elektrozahnbürste in Vibration versetzt wird, vorzugsweise derart, dass die Auslenkung der Borsten (5, 6) in einer Richtung (S2) senkrecht zum Borstenträger (4) kleiner ist als die Auslenkung der Borsten (5, 6) in seitliche Richtung (S1), wobei besonders bevorzugt die Auslenkung der Borsten (5, 6) in einer Richtung (S2) senkrecht zum Borstenträger (4) kleiner als 3mm ist und die Auslenkung der Borsten (5, 6) in seitliche Richtung (S1) kleiner als 5 mm ist.

9. Bürstenkopf (3) nach einem der vorhergehenden Ansprüche, **dadurch gekennzeichnet, dass** der Borstenträger (4) ein in Bewegung versetzbares erstes Trägerelement (4a) und wenigstens ein mit dem Bürstenkopf (3) fest verbundenes zweites Trägerelement (4b) umfasst, wobei auf dem ersten Trägerelement (4a) konventionelle Borsten (6) und auf dem zweiten Trägerelement wenigstens teilweise zugespitzte Filamente (5) angeordnet sind.

10. Bürstenkopf (3) nach einem der vorhergehenden Ansprüche, **dadurch gekennzeichnet, dass** die zugespitzten Filamente (5) in Bündeln (5') angeordnet sind, die vorzugsweise weniger als 80, besonders bevorzugt weniger als 50 Spitzen (5a) enthalten.

11. Bürstenkopf (3) nach Anspruch 10, **dadurch gekennzeichnet, dass** die Bündel (5') eine maximale Breite e von ca. 3 mm haben, wobei die Richtung der maximalen Ausdehnung bevorzugt mit der Richtung der Bewegung des Bürstenkopfs übereinstimmt.

12. Bürstenkopf (3) nach Anspruch 10 oder 11, **dadurch gekennzeichnet, dass** die Bündel (5') in Bewegungsrichtung hintereinander auf dem Borstenträger (4) angeordnet sind, vorzugsweise bei einem rotierenden Borstenträger (4) entlang einer Kreisbahn (10) oder bei einem schwenkbaren Borstenträger in Reihen (9) quer zur Schwenkachse.

13. Bürstenkopf (3) nach einem der vorhergehenden Ansprüche, **dadurch gekennzeichnet, dass** wenigstens 80% der zugespitzten Filamente (5) eine vom Austrittspunkt auf dem Borstenträger (4) gemessene Länge haben, die in einem Intervall zwischen L und L+4mm liegt, wobei L eine vorbestimmte Länge ist, die vorzugsweise 6-8 mm beträgt.

14. Bürstenkopf (3) nach einem der vorhergehenden Ansprüche, **dadurch gekennzeichnet, dass** zugespitzte Filamente (5) und konventionelle Borsten (6) vorhanden sind, wobei die zugespitzten Filamente (5) länger sind als die konventionelle Borsten (6).

15. Elektrozahnbürste mit einem Handgriff und einem Bürstenkopf (3) nach einem der vorhergehenden Ansprüche.

16. Verfahren zur Herstellung eines Bürstenkopfes (3) nach einem der Ansprüche 1-14, **dadurch gekennzeichnet, dass** der Borstenträger (4) an vorbestimmten Stellen mit in Bündeln (5') angeordneten, zugespitzten Filamenten (5) und gegebenenfalls konventionellen Borsten (6) beborstet wird und dass die zugespitzten Filamente (5) und gegebenenfalls die normalen Borsten (6) derart durch Aussparungen im Borstenträger (4) geführt werden, dass ihre Spitzen (5a, 6a) ein vorbestimmtes Höhenprofil einnehmen und dass die abgewandten Enden anschliessend geschnitten und aufgeschmolzen werden.

17. Verfahren nach Anspruch 16, **dadurch gekennzeichnet, dass** der Borstenträger (4) im AFT-oder IMT-Verfahren beborstet wird.

18. Verfahren nach Anspruch 16, **dadurch gekennzeichnet, dass** der Borstenträger (4) in eine vorbereitete Ausnehmung im Bürstenkopf (3) eingesetzt und mit diesem vorzugsweise durch Ultraschallschweissen verbunden wird.

## Claims

1. Brush head (3) for an electric toothbrush with a bristle carrier (4) which can be set in motion, in which bristles (5, 6) are anchored, and which is connected to the brush head (3) such that it can rotate back and forth about an axis of rotation (D) running perpendicularly to the bristle carrier (4) by a maximum angle of rotation (α), **characterized in that** at least a part of the bristles are pointed filaments (5), which are arranged on the bristle carrier (4) in such a way that the maximum distance (rₘₐₓ) of their exit points on the bristle carrier (4) from the axis of rotation (D) is rₘₐₓ = 3 mm * 180°/(π*α) or rₘₐₓ = 3 mm / (2sin(α/2)) and **in that**, during the operation of the electric toothbrush, the tips (5a) of the filaments (5) cover at most a path dₘₐₓ = 3 mm.

2. Brush head (3) according to Claim 1, **characterized in that** the filaments (5) are arranged in clusters (5'), the filaments (5) having a maximum diameter or nominal diameter Δₙₒₘ of 0.15 to 0.25 mm and a length, measured from the exit point on the bristle carrier (4), of 7 to 13 mm, and their diameter being greater than 75% of the nominal diameter up to a distance of 5 to 6 mm from the tip (5a) of the filaments (5) and becoming smaller as the distance becomes less.

3. Brush head (3) according to Claim 1 or 2, **characterized in that**, with an angle of rotation (α) of less than or equal to 20°, the maximum distance (rₘₐₓ) is less than or equal to 8 mm.

4. Brush head (3) according to Claim 1 or 2, **characterized in that**, with an angle of rotation (α) of less than or equal to 30°, the maximum distance (rₘₐₓ) is less than or equal to 5 mm.

5. Brush head (3) according to one of the preceding claims, **characterized in that** the brush head (3) is driven in such a way that the bristles (5, 6) perform at least 1000, preferably more than 5000, movements per minute.

6. Brush head (3) according to one of the preceding claims, **characterized in that** the bristle carrier (4) can be set in a rotational motion by a drive.

7. Brush head (3) according to one of the preceding claims, **characterized in that**, during the operation of the electric toothbrush, the bristle carrier (4) is capable of performing a pivoting movement about an axis running substantially in the longitudinal direction (L) of the brush head (3), with a maximum pivoting angle β, and the following applies for the maximum distance Iₘₐₓ of the tips (5a) of the pointed filaments (5) : Iₘₐₓ = dₘₐₓ · 180° : (πβ) or Iₘₐₓ = dmax: (2sin(β/2)), preferably with dₘₐₓ = 3 mm, dₘₐₓ being the maximum path which the tips (5a) of the filaments (5) cover during the pivoting movement.

8. Brush head (3) according to one of the preceding claims, **characterized in that**, during the operation of the electric toothbrush, the bristle carrier (4) is made to vibrate, preferably in such a way that the deflection of the bristles (5, 6) in a direction (S2) perpendicular to the bristle carrier (4) is less than the deflection of the bristles (5, 6) in a lateral direction (S1), it being particularly preferred for the deflection of the bristles (5, 6) in a direction (S2) perpendicular to the bristle carrier (4) to be less than 3 mm and the deflection of the bristles (5, 6) in a lateral direction (S1) to be less than 5 mm.

9. Brush head (3) according to one of the preceding claims, **characterized in that** the bristle carrier (4) comprises a first carrier element (4a), which can be set in motion, and at least one second carrier element (4b), which is firmly connected to the brush head (3), conventional bristles (6) being arranged on the first carrier element (4a) and at least partly pointed filaments (5) being arranged on the second carrier element (4b).

10. Brush head (3) according to one of the preceding claims, **characterized in that** the pointed filaments (5) are arranged in clusters (5'), which preferably contain fewer than 80, with particular preference fewer than 50, tips (5a).

11. Brush head (3) according to Claim 10, **characterized in that** the clusters (5') have a maximum width e of about 3 mm, the direction of the maximum extent preferably coinciding with the direction of movement of the brush head.

12. Brush head (3) according to Claim 10 or 11, **characterized in that** the clusters (5') are arranged on the bristle carrier (4) one behind the other in the direction of movement, in the case of a rotating bristle carrier (4) preferably along a circular path (10) or in the case of a pivotable bristle carrier in rows (9) transversely to the pivoting axis.

13. Brush head (3) according to one of the preceding claims, **characterized in that** at least 80% of the pointed filaments (5) have a length, measured from the exit point on the bristle carrier (4), which is in an interval between L and L+4 mm, where L is a predetermined length which is preferably 6-8 mm.

14. Brush head (3) according to one of the preceding claims, **characterized in that** there are pointed filaments (5) and conventional bristles (6), the pointed filaments (5) being longer than the conventional bristles (6).

15. Electric toothbrush with a handle and a brush head (3) according to one of the preceding claims.

16. Method for producing a brush head (3) according to one of Claims 1-14, **characterized in that** the bristle carrier (4) is provided at predetermined locations with pointed filaments (5) arranged in clusters (5') and possibly conventional bristles (6) and **in that** the pointed filaments (5) and possibly the normal bristles (6) are led through cutouts in the bristle carrier (4) in such a way that their tips (5a, 6a) assume a predetermined height profile and **in that** the remote ends are subsequently cut and melted.

17. Method according to Claim 16, **characterized in that** the bristle carrier (4) is provided with bristles by the AFT or IMT method.

18. Method according to Claim 16, **characterized in that** the bristle carrier (4) is inserted into a prepared cutout in the brush head (3) and is connected to the latter, preferably by ultrasonic welding.

## Revendications

1. Tête de brosse à dents (3) pour une brosse à dents électrique, comprenant un support de poils (4) pouvant être mis en mouvement, dans lequel sont ancrés des poils (5, 6), et qui est connecté à la tête de brosse à dents (3) de manière rotative d'avant en arrière autour d'un axe de rotation (D) s'étendant perpendiculairement au support de poils (4) suivant un angle de rotation maximal (α), **caractérisée en ce qu'**au moins une partie des poils sont des filaments pointus (5), qui sont disposés sur le support de poils (4) de telle sorte que la distance maximale (rₘₐₓ) de leurs points de sortie sur le support de poils (4) à l'axe de rotation (D) soit rₘₐₓ = 3 mm * 180° / (n*α) ou rₘₐₓ = 3 mm / (2sin(α/2)), et que les pointes (5a) des filaments (5) parcourent lors du fonctionnement de la brosse à dents électrique une course maximale dₘₐₓ = 3 mm.

2. Tête de brosse à dents (3) selon la revendication 1, **caractérisée en ce que** les filaments (5) sont disposés en faisceaux (5'), les filaments (5) ayant un diamètre maximum ou diamètre nominal Δₙₑₙₙ de 0,15 à 0,25 mm et une longueur mesurée depuis le point de sortie sur le support de poils (4) de 7 à 13 mm, et leur diamètre jusqu'à une distance de 5 à 6 mm de la pointe (5a) des filaments (5) étant supérieur à 75% du diamètre nominal et diminuant au fur et à mesure que la distance diminue.

3. Tête de brosse à dents (3) selon la revendication 1 ou 2, **caractérisée en ce que** pour un angle de rotation (α) inférieur ou égal à 20°, la distance maximale (rₘₐₓ) est inférieure ou égale à 8 mm.

4. Tête de brosse à dents (3) selon la revendication 1 ou 2, **caractérisée en ce que** pour un angle de rotation (α) inférieur ou égal à 30°, la distance maximale (rₘₐₓ) est inférieure ou égale à 5 mm.

5. Tête de brosse à dents (3) selon l'une quelconque des revendications précédentes, **caractérisée en ce que** la tête de brosse à dents (3) est entraînée de telle sorte que les poils (5, 6) effectuent au moins 1000, de préférence plus de 5000 mouvements par minute.

6. Tête de brosse à dents (3) selon l'une quelconque des revendications précédentes, **caractérisée en ce que** le support de poils (4) peut être mis en mouvement de rotation par un entraînement.

7. Tête de brosse à dents (3) selon l'une quelconque des revendications précédentes, **caractérisée en ce que** le support de poils (4), lors du fonctionnement de la brosse à dents électrique, est apte à effectuer un mouvement de pivotement autour d'un axe s'étendant essentiellement dans la direction longitudinale (L) de la tête de brosse à dents (3) avec un angle de pivotement maximum β et que l'on a, pour la distance maximale Iₘₐₓ des pointes (5a) des filaments pointus (5) : Iₘₐₓ = dₘₐₓ * 180° : (πβ) ou : lₘₐₓ = dₘₐₓ : (2sin(β/2)), de préférence avec dₘₐₓ = 3 mm, dₘₐₓ étant la course maximale que les pointes (5a) des filaments (5) parcourent lors du mouvement de pivotement.

8. Tête de brosse à dents (3) selon l'une quelconque des revendications précédentes, **caractérisée en ce que** le support de poils (4), lors du fonctionnement de la brosse à dents électrique, est amené à vibrer, de préférence de telle sorte que la déviation des poils (5, 6) dans une direction (S2) perpendiculaire au support de poils (4) soit plus petite que la déviation des poils (5, 6) dans la direction latérale (S1), la déviation des poils (5, 6) dans une direction (S2) perpendiculaire au support de poils (4) étant notamment de préférence inférieure à 3 mm et la déviation des poils (5, 6) dans la direction latérale (S1) étant inférieure à 5 mm.

9. Tête de brosse à dents (3) selon l'une quelconque des revendications précédentes, **caractérisée en ce que** le support de poils (4) comprend un premier élément de support (4a) pouvant être mis en mouvement et au moins un deuxième élément de support (4b) connecté fixement à la tête de brosse à dents (3), des poils conventionnels (6) étant disposés sur le premier élément de support (4a) et des filaments au moins partiellement pointus (5) étant disposés sur le deuxième élément de support (4b).

10. Tête de brosse à dents (3) selon l'une quelconque des revendications précédentes, **caractérisée en ce que** les filaments pointus (5) sont disposés en faisceaux (5') qui contiennent de préférence moins de 80, particulièrement préférablement moins de 50 pointes (5a).

11. Tête de brosse à dents (3) selon la revendication 10, **caractérisée en ce que** les faisceaux (5') ont une largeur maximale e d'environ 3 mm, la direction de l'étendue maximale coïncidant de préférence avec la direction du mouvement de la tête de brosse à dents.

12. Tête de brosse à dents (3) selon la revendication 10 ou 11, **caractérisée en ce que** les faisceaux (5') sont disposés dans la direction du mouvement les uns derrière les autres sur le support de poils (4), de préférence dans le cas d'un support de poils en rotation (4) le long d'une trajectoire circulaire (10) ou dans le cas d'un support de poils pivotant, en rangées (9) transversalement à l'axe de pivotement.

13. Tête de brosse à dents (3) selon l'une quelconque des revendications précédentes, **caractérisée en ce qu'**au moins 80% des filaments pointus (5) ont une longueur mesurée depuis le point de sortie sur le support de poils (4) qui est comprise dans un intervalle entre L et L+4 mm, L étant une longueur prédéterminée qui mesure de préférence 6 à 8 mm.

14. Tête de brosse à dents (3) selon l'une quelconque des revendications précédentes, **caractérisée en ce que** des filaments pointus (5) et des poils conventionnels (6) sont prévus, les filaments pointus (5) étant plus longs que les poils conventionnels (6).

15. Brosse à dents électrique comprenant un manche et une tête de brosse à dents (3) selon l'une quelconque des revendications précédentes.

16. Procédé de fabrication d'une tête de brosse à dents (3) selon l'une quelconque des revendications 1 à 14, **caractérisé en ce que** le support de poils (4) est pourvu de poils à des endroits prédéterminés avec des filaments pointus (5) disposés en faisceaux (5') et éventuellement des poils conventionnels (6), et **en ce que** les filaments pointus (5) et éventuellement les poils normaux (6) sont guidés à travers des évidements dans le support de poils (4) de telle sorte que leurs pointes (5a, 6a) adoptent un profil en hauteur prédéterminé et que les extrémités opposées soient ensuite coupées et fondues.

17. Procédé selon la revendication 16, **caractérisé en ce que** le support de poils (4) est pourvu des poils par un procédé d'implantation sans agrafes (AFT) ou d'implantation dans le moule (IMT).

18. Procédé selon la revendication 16, **caractérisé en ce que** le support de poils (4) est inséré dans un évidement préparé dans la tête de brosse à dents (3) et est connecté à celui-ci de préférence par soudage aux ultrasons.
